# EUROPEAN PATENT SPECIFICATION

(11) **EP 1 664 615 B1**
(45) Date of publication and mention of the grant of the patent: **16.06.2010**
(21) Application number: 04767050.0
(22) Date of filing: 15.09.2004
(51) Int. Cl.: F16L 55/165, H02G 9/06

(54) **METHOD FOR MODIFICATION OF A PIPE COMPRISING INSERTION OF A REPLACEMENT PIPE INTO A HOST PIPE**
VERFAHREN ZUR MODIFIKATION EINES ROHRS DURCH EINSETZEN EINES ERSATZROHRS IN EIN ALTROHR
PROCEDE DE MODIFICATION D'UN TUYAU PAR INSERTION D'UN TUYAU DANS L'ANCIEN TUYAU

(30) Priority: 24.09.2003 FI 20031377
(43) Date of publication of application: 07.06.2006
(73) Proprietor: Ojala, Matti, 02200 Espoo (FI); Tolvanen, Tapio, 33470 Ylöjärvi (FI)
(72) Inventor: Ojala, Matti, 02200 Espoo (FI); Tolvanen, Tapio, 33470 Ylöjärvi (FI)
(74) Representative: Saijonmaa, Olli-Pekka
(86) International application number: PCT/FI2004/000536
(87) International publication number: WO 2005/028941

(56) References cited:
- EP-A1- 0 430 117
- EP-A1- 0 964 106
- WO-A2-03/042588
- DE-A1- 4 031 186
- DE-U1- 29 811 512
- US-A1- 2003 002 923

## Description

This invention relates to a method for modifying a pipe, comprising insertion of a replacement pipe with smaller diameter into the host pipe to be modified, the replacement pipe being anchored into position with the aid of a curable filler introduced into the space between the replacement pipe and the host pipe.

Old drain pipes in use are frequently in bad repair and in need of renewal. In order to avoid laborious excavation, drain pipes are nowadays renewed by laying a new pipe within the old pipe, with the old pipe remaining in position in the ground. Such renewal is allowed by the fact that old pipes often have quite large dimensioning; despite its smaller cross-sectional area, the new pipe has adequate flow capacity, which may be almost of the same order as that of the old pipe owing to the lower friction and flow resistance of the new pipe.

Drain pipes are also nowadays exploited as channels for laying other flow pipes and various cables, especially data communication lines. Cables can be drawn through existing operating drain pipes, or they may be laid during sewer renewal.

One known manner of renewing an old drain pipe is introducing a hose of a flexible and curable material in a suitably flattened or folded state into the pipe, tensioning the hose by pressurising against the inner surface of the old pipe, and finally curing the hose to form a new drain pipe within the old pipe. In such cases, cables or similar additional channels may be integrated or connected by any fastener to the hose sheath, and are thus locked into position as the hose is cured. Old drain pipes can also be renewed using rigid pipes by filling the space between the old pipe and the new pipe with a curable filler paste.

WO 02/01107 discloses a method for renewing drain pipes and for forming additional channels in a drain pipe, in which pipes of a flexible material forming additional channels are fixed by means of a band of curable material to the surface of a flexible hose of a curable material forming the new drain pipe, the hose is inserted into the old drain pipe turned upside down with said pipes and the attaching band being transferred to the inner surface of the hose, the hose and the pipes are pressurised, the hose being pressed against the inner surface of the old drain pipe, and finally the hoses and said band are cured for stabilisation of additional channels delimited from this by means of the new drain pipe and the band.

WO 99/65129 describes drain pipe renewal and laying of data communication cables or similar wires in a drain pipe, in which the wires are laid on top of a flexible hose bent double and introduced into the old drain pipe, the hose is pressurised so as to be pressed against the inner surface of the old pipe while the wires are pressed into the space between the hose and the old pipe, and finally the hose is cured. The reference states that the wires can be surrounded with a filler paste, which fills the gaps between the wires as the hose is pressurised.

WO 99/65129 discloses the use of a rigid pipe as a new drain pipe, and then cables or similar conductor wires are laid on top of this pipe, and finally the space between the outer surface of the pipe and the inner surface of the old drain pipe is filled with a curable filler paste in order to lock the new pipe and the conductor wires into position.

EP 0 430 117 disclosed a method in which a flexible pipe and absorbing material are used.

Prior art methods, in which the space between the old pipe, the host pipe, and one or more new pipes or wires inserted into this, is filled with a liquid filler which is eventually cured, involve the problem of a buoyant force exerted by the filler on the pipe and tending to dislodge the pipe. This problem is most pronounced in pipe renewal or similar modifications, in which a new replacement pipe with clearly smaller diameter is inserted into the host pipe to be modified with the purpose to leave more abundant space between the pipes for various cables, wires and additional channels.

Consequently, the objective of the invention is to find a solution allowing variation of the dimensioning of the replacement pipe inserted into the host pipe and any channels simultaneously formed and of their mutual positions without the problems caused by a filler filling the remaining space of the host pipe.

The method of the invention overcoming the problem mentioned above is characterised by
- inserting into the host pipe, beside the replacement pipe, at least one conduit made of an elastic material, which is placed on top of the replacement pipe,
- pressurising at least one conduit of flexible material in order to press the replacement pipe against the bottom of the host pipe and to position the conduit relative to the replacement pipe and the inner surface of the host pipe,
- filling the space outside the replacement pipe and the one or more pressurised conduits defining the inner surface of the host pipe with a liquid filler, the pressurisation being adapted to overcome the buoyancy exerted by the filler on the replacement pipe for retained positioning achieved by pressurisation, and
- curing the filler in order to stabilise the positioning of the replacement pipe and the conduit or conduits.

The replacement pipe inserted into the host pipe may be a rigid pipe, which retains its shape under the pressurisation exerted by the conduit or conduits on top of it. The interior of the replacement pipe may thus be under normal atmospheric pressure during positioning.

One could optionally use a replacement pipe which yields so as to be slightly deformed under the pressurisation of the conduit or conduits, and then the mutual contact surface between the replacement pipe and the host pipe will increase. The contact surface may then cover at least 20%, perhaps even 30% or more, of the inner circumference of the host pipe in the peripheral direction. The interior of the replacement pipe may be unpressurised, i.e. under normal atmospheric pressure, or it can be pressurised in order to control the degree of deformation. However, the pressure of the replacement pipe should be lower than that of the conduit or conduits on top of it. By flattening the cross-section of the replacement pipe into an elliptical shape, the flow characteristics and throughput of the pipe can be improved.

The conduits placed on top of the replacement pipe may consist of separate flexible hoses, which are pressurised. Each hose then forms a discrete additional channel within the host pipe. Optionally, the hoses may be integrated to form a cellular structure comprising discrete mutually independent channels to be pressurised. Part of the channels can then be used for positioning by pressurisation of the replacement pipe and the channels within the host pipe, and one or more channels, preferably e.g. every second channel, can eventually be filled with a curable filler in order to stabilise additional free channels intended to form flow or cable channels.

Foam concrete, for instance, is appropriate as a flexible, curable filler for use in the invention.

One embodiment of the invention involves roughening of the surfaces of the replacement pipe and/or the pressurised conduits inserted into the host pipe for enhanced adhesion of the filler. On the other hand, such adhesion can be intentionally avoided, and then the conduits are removable after the filler has cured so that the cured filler paste remains defining the additional channels formed with the conduits.

The invention is principally applied during renewal of old drain pipes in bad repair. The old drain pipe forms a host pipe, which receives a smaller pipe preferably made of a rigid material and having a smaller cross-section to form a new replacement pipe, together with one or more flexible hoses, serving to form channels beside the new drain pipe within the host pipe for service water, rain water, drying water and/or various electric and/or data communication cables.

The invention is explained in greater detail below with the aid of examples and with reference to the accompanying drawing, in which
Figures 1-4 show step by step the renewal of an underground drain pipe, in which a new drain pipe is inserted into the old pipe to be renewed together with additional channels for i.a. data communication cables,
Figures 5-6 show an embodiment of the invention corresponding to figures 3 and 4, in which the additional channels are formed by means of an integrated cellular structure, and
Figures 7 and 8 corresponding to figures 2 and 3 show an embodiment of the invention, in which the new drain pipe is collapsible.

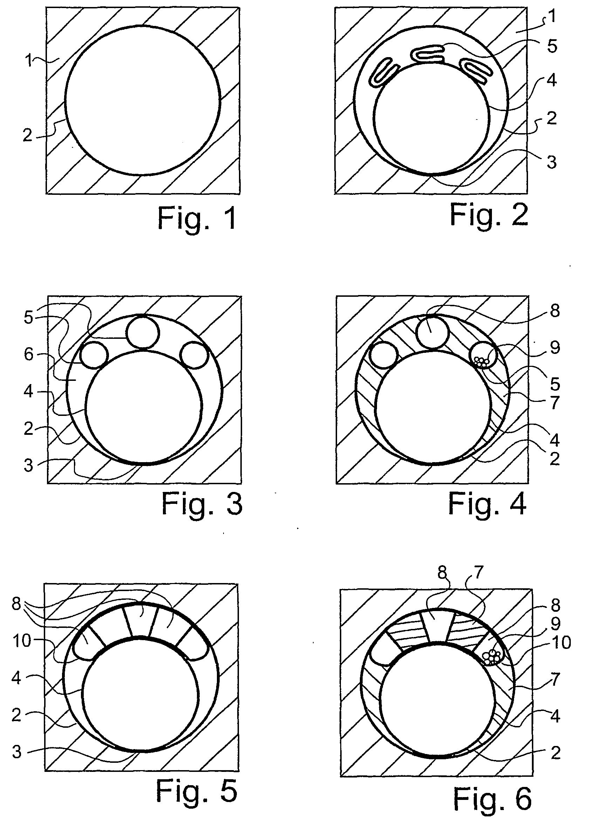

Figure 1 is a cross-sectional view of an old drain pipe 2 laid in the ground 1 and acting as host pipe for a replacement pipe forming the new drain pipe and for a third additional channel during renewal.

In figure 2 the host pipe 2 has received, bearing against its bottom 3, a new drain pipe 4 made of a rigid material and having a smaller diameter, together with three hoses 5 made of a flexible material and fitted in a folded state on top of the new drain pipe 4. The new drain pipe 4 can be assembled in a manner known *per se* from sections, which are interconnected in the longitudinal direction of the pipe and inserted into the old drain pipe 2 through its open end, and the flexible hoses 5 can be pulled into the old drain pipe 2 in the form of continuous bands, which also is an operation known *per se* in prior art. The pipe sections and the hoses are preferably introduced simultaneously into the host pipe 2 with the aid of an appropriate adhesive providing adhesion of the hoses 5 to the pipe 4 thus formed.

The following installation step comprises pressurisation of the hoses 5 as illustrated in figure 3, with the new, rigid drain pipe 4 tensioned against the bottom 3 of the host pipe 2 under the pressure of the hoses. After this, the space 6 between the new drain pipe 4, the pressurised hoses 5 and the inner surface of the host pipe 2 is filled as in figure 4 with a liquid filler, such as foam concrete 7, the pressure prevailing in the hoses 5 retaining the new drain pipe 4 in position in contact with the bottom 3 of the host pipe, regardless of the buoyant force exerted by the filler 7 on the new pipe. Having cured, the filler 7 eventually anchors the new drain pipe 4 forming the main channel and three additional channels 8 formed by the hoses 5 in the positions illustrated in figure 4.

After the filler 7 has cured, the hoses 5 forming additional channels 8 can be depressurised. The adhesion between the hoses 5 and the filler 7, which can be enhanced by roughening the surfaces of the hoses, can be strong enough to retain the hoses in position in the finished structure. The hoses 5 may also consist of a material curing in a manner known *per se,* or they may be curable by irradiation. On the other hand, with the surfaces of the hoses 5 not adhering to the filler 7, they can be withdrawn from the additional channels 8 thus formed after the filler has cured and after depressurisation, so that the additional channels will be defined by the cured filler 7.

In figure 4, one of the formed channels 8 has been exploited by drawing data communication cables 9 through the channel. The two remaining channels 8 are available e.g. as service water or surface water pipes. In a particularly preferred embodiment, an old drain pipe renewed in accordance with the invention can be used for discharging rain, storm and drying water from plots of land and street areas so as to avoid mixture of such waters with effluents from real estates.

Corresponding to figures 3 and 4, figures 5 and 6 illustrate a second embodiment of the invention, in which flexible hoses fitted beside a new drain pipe 4 within an old drain pipe 2 acting as the host pipe have been integrated into a cellular structure 10 comprising five channels 8 in parallel. In figure 5, each of the aligned channels 8 in the cellular structure 10 is pressurised so as to press the new drain pipe 4 located under the cell structure against the bottom 3 of the host pipe 2. Pressurisation prevents the new drain pipe 4 from being dislodged when the space 6 defined by this pipe, the cell structure 10 and the inner surface of the host pipe 2 is filled with a liquid filler 7 as shown in figure 6. In addition, as shown in figure 6, two of the five aligned channel spaces in the cellular structure 10 are filled with a curable filler 7. In this manner, the cellular structure 10 provides, as shown in figure 6, three separate channels 8 for data communication cables 9 or service or surface water pipes.

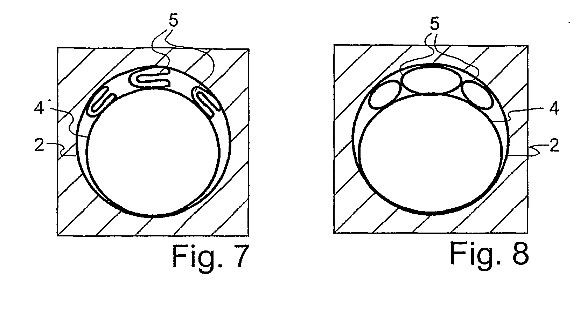

Figures 7 and 8, which show renewal steps of a drain pipe 2 corresponding to figures 2 and 3 explained above, the replacement pipe 4 forming the new drain pipe is deformable unlike the one described above. When the replacement pipe 4, whose interior may be unpressurised, is inserted into the host pipe 2, it is circular in cross-section as shown in figure 7. The hoses 5 of flexible material are fitted in a folded state on top of the replacement pipe 4. In principle, this arrangement is identical to that of figure 2 above. When the hoses 5 are subsequently pressurised, they will press the replacement pipe 4 against the bottom of the host pipe 2, the cross-section of the replacement pipe being compressed into an elliptical shape as shown in figure 8. As a result of compression, the contact surface between the replacement pipe 4 and the inner surface of the host pipe 2 increases, covering about 30% of the inner circumference of the host pipe 2 in the case exemplified in figure 8. Pressurisation has also generated an elliptic shape of the hoses 5. When necessary, inner pressurisation can be applied to the replacement pipe 4 during positioning, yet with a pressure lower than the pressure pressing the replacement pipe 4 of the hoses 5 against the bottom of the host pipe 2. The compression described above allows for enhanced flow characteristics and throughput of the replacement pipe 4 acting as a new drain pipe, in other words, the volume flow through the pipe increases without requiring modification of the cross-sectional area of the pipe. The collapsible replacement pipe 4 also allows more efficient utilisation of the volume of the host pipe 2, that is, the space filled with filler 7 outside the replacement pipe 4 and the hoses 5 will account for a smaller proportion of the total volume of the host pipe.

It is obvious to those skilled in the art that the applications of the invention are not restricted to the examples given above, but may vary within the scope of the following claims. Thus, for instance, the number of additional channels formed by flexible hoses is variable, and the method is not only applicable to renewal of underground drain pipes, but also to modification of pipe connections of other types for new purposes of use.

## Claims

1. A method for modifying a pipe, comprising insertion of a replacement pipe (4) with smaller diameter into a host pipe (2) to be modified, the replacement pipe being anchored into position with the aid of a curable filler (7) introduced into the space between the replacement pipe and the conduit, wherein
- besides the replacement pipe (4), at least one conduit (5) made of a flexible material is inserted into the host pipe (2) and fitted on top of the replacement pipe,
- at least one conduit (5) made of a flexible material is pressurised in order to press the replacement pipe (4) against the bottom (3) of the host pipe (2) and to position the conduit (5) relative to the replacement pipe (4) and the inner surface of the host pipe, **characterised in that**
- the space (6) defining the inner surface of the host pipe (2) outside the replacement pipe (4) and the pressurised conduit or conduits (5) is filled with a liquid filler (7), pressurisation being adapted to overcome the buoyant force exerted by the filler on the replacement pipe in order to retain the positioning achieved by pressurisation, and
- the filler is cured for stabilisation of the replacement pipe (4) and the conduit or conduits (5).

2. A method as defined in claim 1, **characterised in that** the replacement pipe (4) is a rigid pipe, which retains its shape under pressurisation of the conduit or conduits (5).

3. A method as defined in claim 1, **characterised in that** the replacement pipe (4) yields so as to be deformed while being unpressurised or under lower pressure as the conduit or conduits (5) are pressurised, the contact surface between the replacement pipe and the host pipe (2) increasing.

4. A method as defined in claim 3, **characterised in that** the increased contact surface between the replacement pipe (4) and the host pipe (2) accounts for at least 20%, preferably at least 30% of the inner circumference of the host pipe.

5. A method as defined in any of the preceding claims, **characterised in that** the conduits comprise a plurality of discrete flexible hoses (5) and that each of these hoses is pressurised.

6. A method as defined in any of claims 1-4, **characterised in that** the conduits made of a flexible material are integrated into a cellular structure (10) comprising a plurality of aligned channels (8) to be optionally pressurised.

7. A method as defined in any of the preceding claims, **characterised in that** the curable filler (7) is foam concrete.

8. A method as defined in any of the preceding claims, **characterised in that** the surfaces of the replacement pipe (4) and/or conduits (5) have been roughened for enhanced adhesion of the filler (7).

9. A method as defined in any of claims 1-5, **characterised in that**, after the filler (7) has cured, the one or more flexible hoses (5) are removed so that the channels will be defined by the cured paste.

10. A method as defined in any of the preceding claims, **characterised in that** the method is implemented in the renewal of a drain pipe (2) laid underground.

11. A method as defined in claim 10, **characterised in that** a new drain pipe (4) is inserted into an old drain pipe (2) while forming one or more channels (8) for surface or service waters and/or cablings (9).

## Patentansprüche

1. Ein Verfahren zur Modifikation eines Rohrs, das ein Einsetzen eines Ersatzrohrs (4) mit geringerem Durchmesser in ein zu modifizierendes Aufnahmerohr (2) aufweist, wobei das Ersatzrohr mit Hilfe eines härtbaren Füllstoffs (7) in Position verankert wird, welcher in den Freiraum zwischen dem Ersatzrohr und dem Rohr eingebracht wird, wobei
- neben dem Ersatzrohr (4) zumindest eine aus einem flexiblen Material hergestellte Leitung (5) in das Aufnahmerohr (2) eingefügt und auf dem Ersatzrohr montiert wird,
- zumindest eine aus einem flexiblen Material hergestellte Leitung (5) mit Druck beaufschlagt wird, um das Ersatzrohr (4) gegen den Grund (3) des Aufnahmerohrs (2) zu pressen und um die Leitung (5) bezüglich des Ersatzrohrs (4) und der Innenfläche des Aufnahmerohrs zu positionieren, **dadurch gekennzeichnet, dass**
- der Freiraum (6), der die Innenfläche des Aufnahmerohrs (2) außerhalb des Ersatzrohrs (4) und der mit Druck beaufschlagten Leitung oder Leitungen (5) definiert, mit einem flüssigen Füllstoff (7) gefüllt wird, wobei die Druckbeaufschlagung angepasst wird, um die Auftriebskraft zu überwinden, die durch den Füllstoff auf das Ersatzrohr ausgeübt wird, um die durch Druckbeaufschlagung erzielte Positionierung beizubehalten, und
- der Füllstoff für eine Stabilisierung des Ersatzrohrs (4) und der Leitung oder Leitungen (5) ausgehärtet wird.

2. Ein Verfahren nach Anspruch 1, **dadurch gekennzeichnet, dass** das Ersatzrohr (4) ein starres Rohr ist, das seine Form bei Druckbeaufschlagung der Leitung oder Leitungen (5) beibehält.

3. Ein Verfahren nach Anspruch 1, **dadurch gekennzeichnet, dass** das Ersatzrohr (4) nachgibt, so dass dieses verformt wird, wenn es mit keinem Druck beaufschlagt oder mit geringerem Druck beaufschlagt wird, als die Leitung oder Leitungen (5) mit Druck beaufschlagt werden, wobei die Kontaktfläche zwischen dem Ersatzrohr und dem Aufnahmerohr (2) zunimmt.

4. Ein Verfahren nach Anspruch 3, **dadurch gekennzeichnet, dass** die vergrößerte Kontaktfläche zwischen dem Ersatzrohr (4) und dem Aufnahmerohr (2) mindestens 20%, vorzugsweise mindestens 30% des inneren Umfangs des Aufnahmerohrs beträgt.

5. Ein Verfahren nach einem der vorhergehenden Ansprüche, **dadurch gekennzeichnet, dass** die Leitungen eine Vielzahl von separaten, flexiblen Schläuchen (5) aufweisen und dass jeder dieser Schläuche mit einem Druck beaufschlagt wird.

6. Ein Verfahren nach einem der Ansprüche 1 bis 4, **dadurch gekennzeichnet, dass** die aus einem flexiblen Material hergestellten Leitungen in eine zellartige Struktur (10) integriert werden, die eine Vielzahl von ausgerichteten Kanälen (8) aufweist, die wahlweise mit Druck beaufschlagt werden.

7. Ein Verfahren nach einem der vorhergehenden Ansprüche, **dadurch gekennzeichnet, dass** der härtbare Füllstoff (7) ein Schaumbeton ist.

8. Ein Verfahren nach einem der vorhergehenden Ansprüche, **dadurch gekennzeichnet, dass** die Oberflächen des Ersatzrohrs (4) und/oder der Leitungen (5) für eine verbesserte Adhäsion des Füllstoffs (7) angeraut worden sind.

9. Ein Verfahren nach einem der Ansprüche 1 bis 5, **dadurch gekennzeichnet, dass** nachdem der Füllstoff (7) aufgehärtet ist, der eine oder die mehreren flexiblen Schläuche (5) entfernt werden, so dass die Kanäle durch die ausgehärtete Masse definiert werden.

10. Ein Verfahren nach einem der vorhergehenden Ansprüche, **dadurch gekennzeichnet, dass** das Verfahren bei der Erneuerung einer unterirdisch verlegten Ablaufleitung (2) angewandt wird.

11. Ein Verfahren nach Anspruch 10, **dadurch gekennzeichnet, dass** eine neue Ablaufleitung (4) in eine alte Ablaufleitung (2) eingebracht wird, während einer oder mehrere Kanäle (8) für Regen- oder Brauchwasser und/oder Verkabelungen (9) gebildet werden.

## Revendications

1. Procédé de modification d'un tuyau, comprenant l'insertion d'un tuyau de remplacement (4) ayant un petit diamètre dans un tuyau d'accueil (2) qui doit être modifié, le tuyau de remplacement étant ancré en position à l'aide d'une charge de remplissage (7) pouvant durcir introduite dans l'espace entre le tuyau de remplacement et la conduite, dans lequel :
- en plus du tuyau de remplacement (4), au moins une conduite (5) composée d'un matériau souple est insérée dans le tuyau d'accueil (2) et ajustée sur le tuyau de remplacement,
- au moins une conduite (5) composée d'un matériau souple est mise sous pression afin d'appuyer le tuyau de remplacement (4) contre le fond (3) du tuyau d'accueil (2) et de positionner la conduite (5) par rapport au tuyau de remplacement (4) et à la surface interne du tuyau d'accueil,
**caractérisé en ce que** :
- l'espace (6) définissant la surface interne du tuyau d'accueil (2) à l'extérieur du tuyau de remplacement (4) et de la conduite ou des conduites (5) sous pression est rempli d'une charge de remplissage(7) liquide, la mise sous pression étant prévue pour surmonter la force gravitaire exercée par la charge de remplissage sur le tuyau de remplacement afin de conserver le positionnement obtenu grâce à la mise sous pression, et
- la charge de remplissage est durcie pour la stabilisation du tuyau de remplacement (4) et de la conduite ou des conduites (5).

2. Procédé tel que défini dans la revendication 1, **caractérisé en ce que** le tuyau de remplacement (4) est un tuyau rigide, qui conserve sa forme si la conduite ou les conduites (5) est/sont mise(s) sous pression.

3. Procédé tel que défini dans la revendication 1, **caractérisé en ce que** le tuyau de remplacement (4) est produit de façon à se déformer lorsqu'il est dépressurisé ou lorsqu'il est sous une pression inférieure alors que la conduite ou les conduites (5) est/sont mise(s) sous pression, la surface de contact entre le tuyau de remplacement et le tuyau d'accueil (2) augmentant.

4. Procédé tel que défini dans la revendication 3, **caractérisé en ce que** la surface de contact augmentée entre le tuyau de remplacement (4) et le tuyau d'accueil (2) compte pour au moins 20 %, de préférence au moins 30 % de la circonférence interne du tuyau d'accueil.

5. Procédé tel que défini dans l'une quelconque des revendications précédentes, **caractérisé en ce que** les conduites comprennent une pluralité de flexibles discrets (5) et **en ce que** chacun de ces flexibles est mis sous pression.

6. Procédé tel que défini dans l'une quelconque des revendications 1 à 4, **caractérisé en ce que** les conduites constituées d'un matériau souple sont intégrées dans une structure cellulaire (10) comprenant une pluralité de canaux alignés (8) qui doivent être éventuellement mis sous pression.

7. Procédé tel que défini dans l'une quelconque des revendications précédentes, **caractérisé en ce que** la charge de remplissage pouvant durcir (7) est du béton cellulaire.

8. Procédé tel que défini dans l'une quelconque des revendications précédentes, **caractérisé en ce que** les surfaces du tuyau de remplacement (4) et/ou des conduites (5) ont été grattées pour une meilleure adhérence de la charge de remplissage (7).

9. Procédé tel que défini dans l'une quelconque des revendications 1 à 5, **caractérisé en ce que**, lorsque la charge de remplissage (7) a durci, le ou les flexibles (5) est/sont retiré(s), de telle sorte que les canaux seront définis par la pâte durcie.

10. Procédé tel que défini dans l'une quelconque des revendications précédentes, **caractérisé en ce que** le procédé est mis en oeuvre dans le renouvellement d'un tuyau d'évacuation (2) enterré.

11. Procédé tel que défini dans la revendication 10, **caractérisé en ce qu'**un nouveau tuyau d'évacuation (4) est inséré dans un ancien tuyau d'évacuation (2) tout en formant un ou plusieurs canaux (8) pour les eaux de ruissellement et les eaux industrielles et/ou les câblages (9).
